# EUROPÄISCHE PATENTANMELDUNG

(11) **EP 0 726 176 A1**
(43) Veröffentlichungstag der Anmeldung: **14.08.1996**
(21) Anmeldenummer: 96101158.2
(22) Anmeldetag: 27.01.1996
(51) Int. Cl.: B60D 1/07, B60D 1/02

(54) **Zuggabel**

(30) Priorität: 11.02.1995 DE 19504591
(71) Anmelder: Hunger, Walter, D-97074 Würzburg (DE)
(72) Erfinder: Hunger, Walter, D-97074 Würzburg (DE)
(74) Vertreter: Witte, Alexander, Dr.-Ing.

(57) **Zusammenfassung**

Eine Zuggabel (10) für Anhänger dient als Zugkraftübertragungsmittel zwischen einem Schleppfahrzeug und dem Anhänger. Die Zuggabel (10) weist eine erste Zugöse (20) mit einem Innendurchmesser (d₁) und eine zweite Zugöse (24) mit einem Innendurchmesser (d₂) auf. Zum Ankuppeln der Zuggabel (10) an eine Anhängerkupplung (50) eines Zugfahrzeuges ist ein Kupplungsbolzen (52) der Anhängerkupplung (50) durch eine der beiden Zugösen (20, 24) durchsteckbar. Die erste Zugöse (20) sowie die zweite Zugöse (24) sind als Köpfe einer gemeinsamen Stange (22) ausgebildet, die mittels eines Drehgelenkes (40) verschwenkbar an der Zuggabel (10) gelagert ist. Die Stange ist in einer Horizontalebene um mindestens 180° verschwenkbar gelagert.

## Beschreibung

Die Erfindung betrifft eine Zuggabel für Anhänger, mit einer ersten, einen ersten Innendurchmesser aufweisenden Zugöse und mit mindestens einer zweiten, einen zweiten Innendurchmesser aufweisenden Zugöse, wobei zum Ankuppeln der Zuggabel an eine Anhängerkupplung eines Zugfahrzeuges ein Kupplungsbolzen der Anhängerkupplung durch eine der beiden Zugösen durchsteckbar ist und die erste Zugöse sowie die zweite Zugöse als Köpfe eines gemeinsamen Elementes, vorzugsweise einer gemeinsamen Stange, ausgebildet sind, das mittels eines Drehgelenkes in einer Horizontalebene um mindestens 180° verschwenkbar an der Zuggabel gelagert und dort arretierbar ist.

Eine Zuggabel der vorstehend genannten Art ist aus der DE 30 49 449 A1 bekannt.

Zuggabeln dienen zum Übertragen einer horizontalen Zugkraft von einem Zugfahrzeug auf einen Anhänger ohne Eigenantrieb, und sind als solches ein Bauteil des Anhängers. Die Zuggabel ist in sich starr und als Zugkraftübertragungsmittel von großen Zugkräften geeignet. In diesem Zusammenhang ist die Zuggabel ein sicherheitsrelevantes Bauteil des Anhängers und dementsprechend einer Bauartgenehmigung unterworfen.

Zuggabeln weisen an ihrem freien Ende eine an einen Träger der Zuggabel angeformte Zugöse auf. Die Zugöse dient zum Ankuppeln der Zuggabel an eine an dem Zugfahrzeug vorgesehene Anhängerkupplung. Die Anhängerkupplung weist ihrerseits einen Kupplungsbolzen auf, der durch die Zugöse steckbar ist. Kupplungsbolzen und Zugöse stellen demnach eine lösbare Verbindung zwischen der Zuggabel und der Anhängerkupplung dar. Dabei ist es von wesentlicher Bedeutung, daS der Kupplungsbolzen in der Zugöse kein Spiel hat, um eine stetige, ruckfreie Kraftübertragung zwischen dem Zugfahrzeug und dem Anhänger herzustellen. Das heißt, der Innendurchmesser der Zugöse und der Durchmesser des Kupplungsbolzens entsprechen einander, so daß der Kupplungsbolzen formschlüssig in die Zugöse eingreifen kann.

Um eine möglichst hohe Kompatibilität zwischen den verschiedensten Anhängern mit ihren Zuggabeln und den verschiedensten Schleppfahrzeugen und deren Anhängerkupplungen zu haben, ist der Innendurchmesser der Zugöse und der Durchmesser des Kupplungsbolzens genormt. In Deutschland schreibt die Norm (DIN 74051) einen Innendurchmesser der Zugöse und einen Durchmesser des Kupplungsbolzens von 40 mm vor. Bisher gibt es jedoch außer einer europäischen Norm EG 94/20 für 50 mm Kupplungsbolzendurchmesser noch keine internationale Norm, so daß internationale Zuggabeln und Anhängerkupplungen mit verschiedenen entsprechenden Durchmessern vorzufinden sind. Zur Zeit sind europaweit Anhängerkupplungen mit 40 mm und 50 mm Kupplungsbolzendurchmesser im Einsatz, und dementsprechend Zuggabeln mit Zugösen von 40 mm und 50 mm Innendurchmesser. Daraus ergibt sich das Problem, daß eine Zuggabel mit 40 mm Innendurchmesser der Zugöse nicht mit einem Schleppfahrzeug kompatibel ist, dessen Anhängerkupplung einen Kupplungsbolzen von 50 mm aufweist. Das gleiche gilt für den umgekehrten Fall.

Daraus ergibt sich zwangsläufig der Nachteil, daß die Kompatibilität der Zuggabeln mit einer Zugöse bezüglich der Kupplungsbolzen der Anhängerkupplung begrenzt ist. Im Falle, daß die Kupplungsbolzendurchmesser auch international in Zukunft vereinheitlicht werden sollten, bedeutet dies, daß vor der internationalen Normierung hergestellte Anhänger nachträglich einem Austausch der Zuggabel unterworfen werden müssen, falls die Zuggabel eine Zugöse aufweist, die gerade nicht einen Innendurchmesser aufweist, der dem dann genormten Durchmesser des Kupplungsbolzens entspricht.

Bei einer bekannten Kupplung mit der Typenbezeichnung GSZ der Firma Grau GmbH, Heidelberg, ist die Zuggabel am vorderen freien Ende mit zwei nebeneinander liegenden Schenkeln versehen, zwischen denen eine Stange um eine horizontale Achse quer zur Fahrtrichtung gelagert ist.

Die Stange ist an ihren beiden Enden mit jeweils einer Zugöse versehen, wobei die eine Zugöse einen Innendurchmesser von 40 mm und die andere einen Innendurchmesser von 50 mm aufweist. Die Stange ist innerhalb einer Vertikalebene um etwa 10° beidseits der horizontalen Schwenkachse geknickt. Wenn also das vordere Ende der Stange in horizontaler Richtung nach vorne weist, ist das hintere Ende der Stange um etwa 10° nach unten aus der Horizontalen abgeknickt.

Im Abstand hinter den beiden Schenkeln am vorderen Ende der Zuggabel ist zwischen den beiden Schenkeln eine Traverse eingeschweißt, die einen nach vorne weisenden Schuh mit ebenfalls um 10° zur Horizontalen geneigten Anlageflächen aufweist. In der bereits geschilderten Stellung liegt das hintere freie Ende der Stange von unten gegen die schräge Anlagefläche der Traverse an und ist dort mittels einer Flügelschraube arretiert. Wenn die Zuggabel für den jeweils anderen Kupplungsbolzendurchmesser eingesetzt werden soll, wird die Flügelschraube gelöst und die Stange in einer Vertikalebene um etwa 160° verschwenkt, bis das zuvor nach vorne weisende freie Ende der Stange auf der oberen abgeschrägten Anlagefläche der Traverse aufliegt und das zuvor untere, an der Traverse anliegende freie Ende der Stange nach vorne in eine Horizontalrichtung geschwenkt wurde.

Die bekannte Anordnung ist damit relativ kompliziert im Aufbau und bedingt eine Traverse mit exakt ausgerichteten Anlageflächen. Ferner sind nur Anordnungen mit zwei unterschiedlichen Ösendurchmessern möglich. Schließlich ist die Art und Weise der Fixierung des jeweils hinteren Armes der Stange schwierig, weil die dazu verwendete Flügelschraube verlorengehen kann. Auch ist lästig, daß zum Wechsel der Ösen jeweils von unten Zugriff auf die Flügelschraube genommen werden muß.

Aus der eingangs genannten DE 30 49 449 A1 ist ein Mehrfach-Anhängeraugenkreuz bekannt. Bei dieser bekannten Vorrichtung ist am freien Ende einer Deichsel eines Anhängers eine Zugösenanordnung befestigt, und zwar mittels eines vertikalachsigen Drehgelenks. Die Zugösenanordnung weist mehrere freie Arme auf, deren freien Enden Augen unterschiedlichen Durchmessers aufweisen. Durch Verdrehen des so gebildeten Kreuzes in einer Horizontalebene kann das Auge mit dem gewünschten Durchmesser in einer Position in freier Verlängerung der Deichsel angeordnet werden, um dort mit einer Anhängerkupplung eines Zugfahrzeuges gekoppelt zu werden. Um das Drehkreuz in einer bestimmten Drehstellung zu arretieren, greifen mehrere Kugeln formschlüssig in zugehörige Ausnehmungen der Deichsel einerseits und des Drehkreuzes andererseits ein. Um diese formschlüssige Anordnung in Vertikalrichtung zu verspannen, ist eine elastische Spannbuchse vorgesehen, die über eine Kegelfläche eines Drehbolzens eine vertikale Zugkraft erzeugt.

Bei dieser bekannten Anordnung ist von Nachteil, daß die jeweils nicht benötigten Arme des Drehkreuzes frei abstehen. Wenn das Drekkreuz nur aus zwei entgegengesetzt gerichteten Armen besteht, liegt der hintere, ungenutzte Arm lose oben auf der Deichsel auf. Wenn z.B. dann auf den vorderen Arm eine vertikale Kraft von oben einwirkt, so kann dieser Arm unter Umständen abbrechen, weil der hintere Arm lose aufliegt und somit nach oben abheben kann, wenn der vordere Arm nach unten gedrückt wird. Ferner gewährleistet die formschlüssige Kugelverbindung nur in begrenztem Umfang eine Arretierung des Drehkreuzes in einer Drehstellung in der Horizontalebene. Wenn nämlich der aus Zugfahrzeug und Anhänger bestehende Sattelzug z.B. durch eine enge Kurve fährt, insbesondere an einer steilen Bergstrecke, so wird ein erhebliches Drehmoment auf das Drehkreuz ausgeübt, mit der Folge, daß die Haltekraft der Kugeln überwunden werden kann und sich das Drehkreuz ungewollt verdreht. Dann kann sich eine negative Wirkung auf die Lenkgeometrie der Gesamtanordnung und eine Gefährdung der Betriebssicherheit ergeben.

Schließlich ist die Verspannvorrichtung im vertikalachsigen Drehlager relativ aufwendig und schwierig zu handhaben, wenn das Drehkreuz in eine andere Arbeitsstellung gebracht werden soll.

Aus der DE 680 693 ist eine Anhängerkupplung für Kraftfahrzeuge bekannt. Die Anhängerkupplung ist am Hänger mit einer Stange versehen, deren freies Ende zwei übereinander angeordnete horizontale Schenkel aufweist. Zwischen diese Schenkel kann ein freies Ende einer Zugöse eingesteckt werden. Das andere freie Ende der Zugöse kann in an sich bekannter Weise mit einer Anhängerkupplung eines Zugfahrzeuges verbunden werden.

Um Zugösen mit unterschiedlichem Augendurchmesser am hängerseitigen Ende ankuppeln zu können, ist das freie Ende der Stange im Bereich der beiden horizontalen Schenkel mit sogenannten Füllstücken versehen, von denen eines einen vertikalachsigen Kupplungsbolzen aufnimmt. Der Kupplungsbolzen greift durch die beiden horizontalen Schenkel und durch das Auge an dem zwischen die Schenkel eingeschobenen freien Ende der Zugöse. Die Füllstücke erfüllen dabei die Funktion eines Adapters und können je nach Durchmesser des Auges gewählt werden.

Der Erfindung liegt die Aufgabe zugrunde, eine Zuggabel der eingangs genannten Art dahingehend weiterzubilden, daß unter Beibehaltung der an sich bekannten erhöhten Kompatibilität zwischen Zugfahrzeugen und Anhängern mit unterschiedlichem Kupplungsbolzendurchmesser die Handhabung und Betriebssicherheit der Zuggabel deutlich vereinfacht wird.

Diese Aufgabe wird erfindungsgemäß dadurch gelöst, daß die Zuggabel an ihrem freien Ende übereinander zwei horizontale Schenkel aufweist, zwischen denen das Element verschwenkbar gelagert ist, und daß zum Arretieren des Elementes an der Zuggabel mindestens ein lösbarer Arretierbolzen vorgesehen ist, der durch die beiden Schenkel sowie eine der beiden Zugösen gesteckt ist, die sich zwischen den Schenkeln befindet.

Die Erfindung hat den Vorteil, daß das Drehgelenk durch die beiden Schenkel insbesondere gegen Bruch geschützt ist, der dadurch verursacht werden kann, daß vertikal auf die an die Anhängerkupplung angekuppelte Zugöse wirkende Kräfte durch die Stange hebelartig verstärkt werden, wodurch das Drehgelenk auch auf Scherkräfte beansprucht wird. Die massiv ausgebildeten Schenkel fassen demgegenüber die Stange ein und begrenzen wirksam die Hebelwirkung.

Die Erfindung hat ferner den Vorteil, daß eine zuverlässige, starre Verbindung zwischen der Zugöse und der übrigen Zuggabel hergestellt werden kann, so daß die erfindungsgemäße Zuggabel hinsichtlich ihrer Betriebssicherheit und Funktionsweise die an die Zuggabel allgemein gestellten Anforderungen völlig erfüllt. Ein lösbarer Arretierbolzen ist geeignet, die Arretierung der Stange zu bewirken. Dies geschieht dadurch, daß der Arretierbolzen durch die nicht zum Ankuppeln benötigte Zugöse einerseits und durch eine entsprechende Öffnung in der Zuggabel andererseits durchgesteckt wird, so daß die Stange durch Fixierung an zwei Punkten, nämlich dem Drehgelenk und dem Arretierbolzen, gegen ein Verschwenken blockiert ist. Des weiteren läßt sich die Arretierung durch Entfernen des Bolzens einfach lösen, wenn die Stange um 180° verschwenkt werden muß, damit die Zuggabel für einen anderen Einsatz vorbereitet werden kann.

In einer besonders vorteilhaften Ausgestaltung weist der Arretierbolzen einen ersten Bolzenabschnitt mit einem dem ersten Innendurchmesser der ersten Zugöse entsprechenden Durchmesser und einen zweiten Bolzenabschnitt mit einem dem zweiten Innendurchmesser der zweiten Zugöse entsprechenden Durchmesser auf.

Diese Maßnahme hat den Vorteil, daß zum Arretieren der Stange nur ein Arretierbolzen benötigt wird. Der Arretierbolzen kann nämlich aufgrund seiner Ausgestaltung sowohl formschlüssig durch die erste Zugöse als auch formschlüssig durch die zweite Zugöse gesteckt werden, so daß in beiden Fällen eine spielfreie Arretierung der Stange möglich ist.

In einem Ausführungsbeispiel ist in dem ersten Schenkel eine erste Öffnung mit einem dem ersten Innendurchmesser und in dem zweiten Schenkel eine zweite Öffnung mit einem dem zweiten Innendurchmesser entsprechenden Durchmesser vorgesehen, wobei die erste Zugöse oder die zweite Zugöse in eine Position zwischen der ersten Öffnung und der zweiten Öffnung bringbar ist, und der Arretierbolzen durch die erste Öffnung, die erste Zugöse oder die zweite Zugöse und die zweite Öffnung steckbar ist.

Zusammen mit der vorteilhaften Ausgestaltung des Arretierbolzens, indem dieser nämlich zwei entsprechende Bolzenabschnitte aufweist, kann in beiden Fällen, in denen die Zuggabel entweder mit der ersten Zugöse oder mit der zweiten Zugöse an die Anhängerkupplung des Zugfahrzeuges angekuppelt wird, die Stange, die die beiden Zugösen trägt, formschlüssig an der Zuggabel arretiert werden.

In einer weiteren Ausgestaltung der Erfindung weist das Drehgelenk einen demontierbaren Gelenkbolzen auf.

Wie bereits erwähnt, kann die Variabilität der Zuggabel weiter erhöht werden, indem die Stange, die die erste Zugöse und die zweite Zugöse umfaßt, gegen eine andere Stange, die entsprechend andere Zugösen aufweist, ausgetauscht werden kann.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine unterbrochene, teilweise aufgebrochene Draufsicht auf die erfindungsgemäße Zuggabel;
- Fig. 2: einen Querschnitt der erfindungsgemäßen Zuggabel aus Fig. 1 in einer ersten Betriebsart; und
- Fig. 3: einen Querschnitt der erfindungsgemäßen Zuggabel aus Fig. 1 entsprechend einer zweiten Betriebsart.

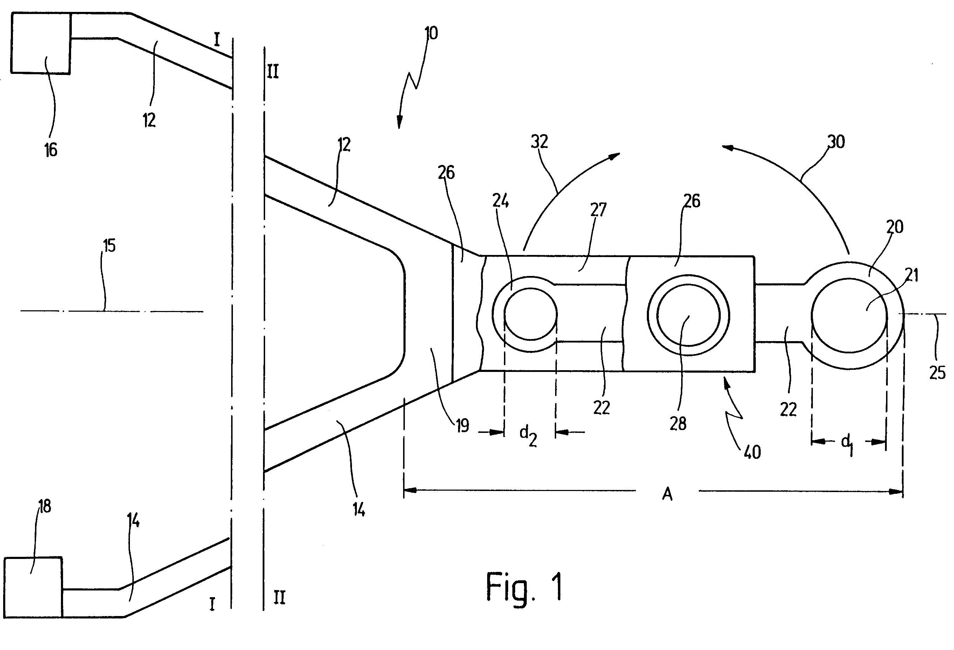

In Fig. 1 ist eine insgesamt mit dem Bezugszeichen 10 versehene Zuggabel dargestellt, wobei die Darstellung entlang der Linien I-I und II-II unterbrochen ist. Die Zuggabel 10 dient allgemein als horizontale Zugkraftübertragungsvorrichtung zwischen einem horizontal geschleppten Anhänger einerseits und einem Zugfahrzeug andererseits. Anhänger und Zugfahrzeug sind in Fig. 1 nicht dargestellt. Die Zuggabel 10 ist dabei als Bestandteil des Anhängers an dem Anhänger dauerhaft montiert. Eine trennbare Verbindung besteht demnach in der Regel nur zwischen der Zuggabel 10 und dem Schleppfahrzeug.

Die Zuggabel 10 weist zwei Gabelarme 12 und 14 auf. Die Gabelarme 12 und 14 sind mittels allgemein bekannter und hier nicht näher erläuterter Befestigungsvorrichtungen 16 und 18 an den Anhänger fest montiert, wobei die Zuggabel 10 entweder starr oder die Lenkbewegungen des Anhängers unterstützend an dem Anhänger befestigt sein kann.

Die Gabelarme 12 und 14 laufen vom Anhänger zum Schleppfahrzeug gesehen in Richtung einer Längsmittelachse 15 der Zuggabel 10 hin in einen massiv ausgebildeten Block 19 zusammen.

Die Zuggabel 10 weist eine erste Zugöse 20 auf. Die Zugöse 20 ist als Ring mit einer kreisförmigen Öffnung 21 ausgebildet, die einen Innendurchmesser d1 der Zugöse 20 definiert. Der Innendurchmesser d1 der Zugöse 20 beträgt z.B. 50 mm. Weiterhin ist die Zugöse 20 als ein Kopf einer Stange 22 ausgebildet. Die Stange 22 weist an ihrem anderen Kopf eine zweite Zugöse 24 auf, die ebenfalls als Ring mit einer kreisförmigen Öffnung ausgebildet ist. Diese kreisförmige Öffnung definiert einen zweiten Innendurchmesser d2 der zweiten Zugöse 24, der z.B. 40 mm beträgt.

Mittelpunkte der kreisförmigen Öffnungen der ersten Zugöse 20 und der zweiten Zugöse 24 liegen auf einer Längsmittelachse 25 der Stange 22. Mittelebenen der ersten Zugöse 20 und der zweiten Zugöse 24 liegen in einer gemeinsamen Ebene.

Ein Teil der Stange 22 und die Zugöse 24 sind gemäß der in Fig. 1 gezeigten aufgebrochenen Darstellung unter einem Schenkel 26 der Zuggabel 10 angeordnet.

Die Stange 22 und damit die an die Stange 22 angeformte erste Zugöse 20 und die angeformte zweite Zugöse 24 sind um eine Drehachse 28 in einer horizontalen Ebene um 360° in Richtungen von Pfeilen 30 und 32 verschwenkbar. Insbesondere sind die erste Zugöse 20 und die zweite Zugöse 24 in eine vorgegebene Kuppelposition relativ zur Zuggabel bringbar.

Es versteht sich, daß statt einer geraden Stange 22 mit zwei Zugösen 20 und 24 an den beiden freien Enden auch ein anderes Element eingesetzt werden kann, bei dem mehr als zwei Zugösen an der Peripherie angeordnet sind. Ein solches Element kann in der Draufsicht die Gestalt eines Sternes, einer Scheibe o. dgl. aufweisen.

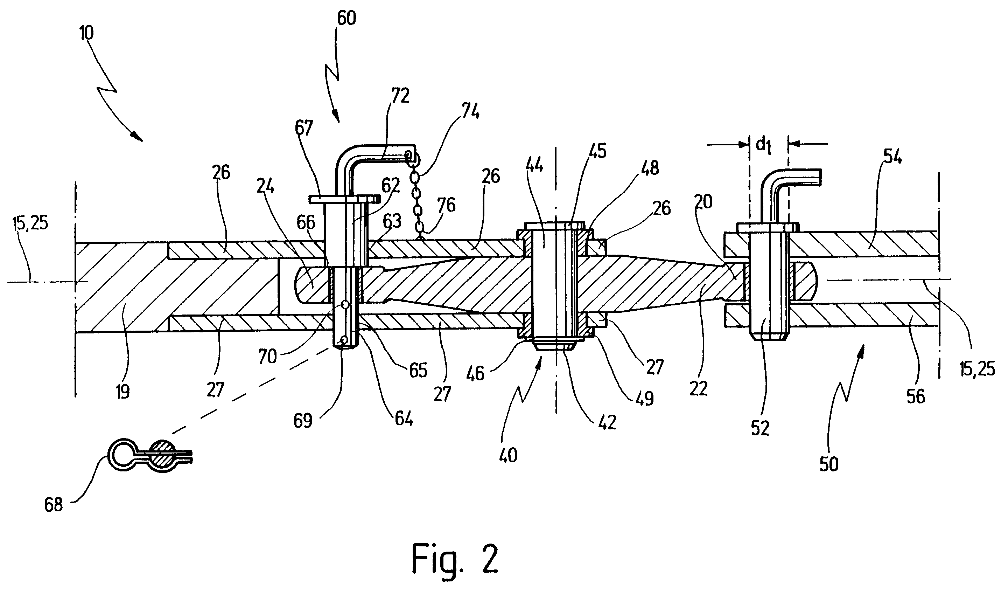

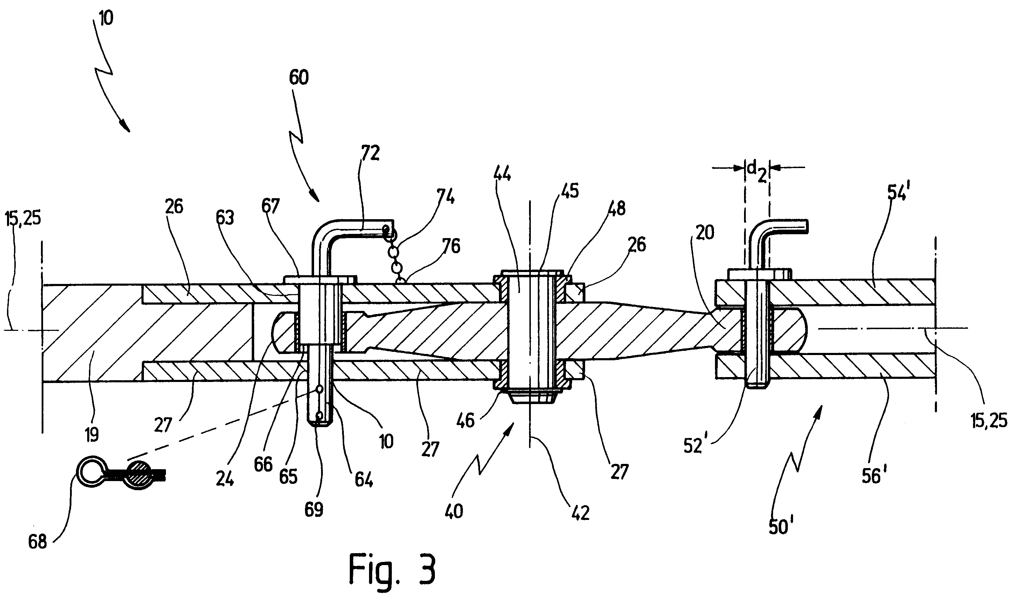

Die verschwenkbare Stange 22 mit der ersten Zugöse 20 und der zweiten Zugöse 24 ist fest mit der Zuggabel arretierbar, so daß die gesamte Zuggabel in sich starr ist, wie es bei einem Zugbetrieb des Anhängers durch das Zugfahrzeug erforderlich ist. Das Arretieren der Stange 22 wird anhand weiterer Figuren 2 und 3 unten erläutert. Im arretierten Zustand fluchtet die Längsmittelachse 25 der Stange 22 mit der Längsmittelachse 15 der Zuggabel 10.

In den Figuren 2 und 3 sind zwei vorkommende Betriebsfälle eines bestimmungsgemäßen Einsatzes der Zuggabel 10 näher erläutert.

Fig. 2 zeigt eine Querschnittsdarstellung der Zuggabel 10 entlang der Längsmittelachse 15 der Zuggabel 10, und zwar in einem mit A bezeichneten Bereich der Zuggabel 10 aus Fig. 1.

Die Zuggabel 10 weist neben dem oberen Schenkel 26 einen weiteren unteren Schenkel 27 auf, wobei beide Schenkel 26, 27 an den massiven Block 19 der Zuggabel 10, in den die Gabelarme 12 und 14 zusammengeführt sind, angeformt sind.

Zwischen den Schenkeln 26 und 27 ist die Stange 22 mittels eines Drehgelenkes 40 verschwenkbar gelagert, wobei eine Mittelachse 42 des Drehgelenks 40 die Drehachse 28 in Fig. 1 definiert. Die Stange 22 ist um die Mittelachse 42 in einer Ebene senkrecht zur Zeichenebene verschwenkbar. Im Bereich des Drehgelenkes 40 ist die Stange 22 ohne vertikales Spiel zwischen den Schenkeln 26 und 27 gelagert.

Das Drehgelenk 40 weist einen Gelenkbolzen 44 mit einem Kopf 45 auf, wobei der Gelenkbolzen 44 durch den oberen Schenkel 26, die Stange 22 und den unteren Schenkel 27 durchgesteckt ist. Ein Sicherungselement 46 sichert den Gelenkbolzen 44 gegen Herausfallen. Der Gelenkbolzen 44 kann auch ein Gewinde aufweisen, auf das anstelle des Sicherungselementes 46 eine selbstsichernde Kronmutter aufgeschraubt wird, so daß der Gelenkbolzen jederzeit leicht und schnell herausgenommen werden kann, z.B. um die Stange 22 mit der ersten Zugöse 20 und der zweiten Zugöse 24 gegen eine andere Stange auszutauschen.

Der Gelenkbolzen 44 ist kraftschlüssig und spielfrei in den Schenkeln 26 und 27 gelagert. Hierzu können einfache Bohrungen in den Schenkeln 26 und 27 vorgesehen werden. Man kann aber auch zur besseren Lagerung des Gelenkbolzens auch spezielle Lagerelemente, beispielsweise Stellringe 48, 49, einsetzen, wie sie in Fig. 2 beispielhaft dargestellt sind. Die Stange 22 ist um den Gelenkbolzen 44 um 360° verschwenkbar.

Die Mittelachse 42 des Drehgelenks 40 schneidet die Längsmittelachse 15 der Stange 22 mittig und lotrecht, d.h. die Stange 22 wird in Richtung der Längsmittelachse 15 in zwei gleich lange Arme unterteilt.

In Fig. 2 ist nun eine Situation dargestellt, in der eine Anhängerkupplung 50 des Schleppfahrzeuges einen Kupplungsbolzen 52 mit einem dem Innendurchmesser d1 der ersten Zugöse 20 entsprechenden Durchmesser aufweist. Für diesen Betriebsfall, der der Situation in Fig. 1 entspricht, wird demnach die Stange 22 so verschwenkt, daß die Zuggabel 10 mit der ersten Zugöse 20 des Innendurchmessers d1 zwischen zwei Backen 54, 56 der Anhängerkupplung 50 gefahren und der Kupplungsbolzen 52 durch die erste Zugöse 20 spielfrei durchgesteckt werden kann.

Vor dem Ankuppeln der Zuggabel 10 mit der ersten Zugöse 20 an die Anhängerkupplung 50 wird die Stange 22 starr arretiert. Dazu ist ein Arretierbolzen 60 vorgesehen, der zwei Bolzenabschnitte 62 und 64 aufweist, wobei der erste Bolzenabschnitt 62 einen dem Innendurchmesser d1 der ersten Zugöse entsprechenden Durchmesser und der zweite Bolzenabschnitt 64 einen dem Innendurchmesser d2 der zweiten Zugöse entsprechenden Durchmesser aufweist. In dem oberen Schenkel 26 der Zuggabel ist entsprechend eine erste Öffnung 63 mit Durchmesser d1 und in dem unteren Schenkel eine zweite Öffnung 65 mit dem Durchmesser d2 vorgesehen. Zum Arretieren der Stange 22 in dem in Fig. 2 gezeigten Betriebsfall ist der Arretierbolzen 60 mit dem zweiten Bolzenabschnitt 64 durch die zweite Zugöse 24 und die zweite Öffnung 65 des unteren Schenkels 27 spielfrei durchgesteckt. Dabei liegt der Arretierbolzen 60 mit einer Schulter 66 zwischen dem ersten Bolzenabschnitt 62 und dem zweiten Bolzenabschnitt 64 auf der zweiten Zugöse 24 auf. Der erste Bolzenabschnitt 62 sitzt dabei spielfrei in der ersten Öffnung 63 des oberen Schenkels 26.

Zusammen mit dem Drehgelenk 40 bewirkt der Arretierbolzen 60 eine starre und spielfreie Arretierung der Stange 22, so daß die Zuggabel 10 als ganzes starr ist.

Mit einem Splint 68 wird der Arretierbolzen 60 unterhalb des unteren Schenkels 27 durch Durchstecken durch eine untere Öffnung 69 des zweiten Bolzenabschnitts 64 des Arretierbolzens 60 gesichert. Danach ist die Zuggabel betriebsbereit zum Ankuppeln an die Anhängerkupplung 50 des Zugfahrzeuges. Weiterhin ist der Arretierbolzen 60 mittels einer an einem Bedienungsgriff 72 und an einem Befestigungspunkt 76 des oberen Schenkels 26 befestigten Kette 74 gegen Verlust gesichert.

In Fig. 3 ist dieselbe Zuggabel 10 wie in Fig. 2 dargestellt für den Betriebsfall, daß eine Anhängerkupplung 50' einen Kupplungsbolzen 52' mit einem Durchmesser d2 aufweist. In diesem Fall wird die zweite Zugöse 24 so verschwenkt, daß die Zuggabel 10 mit der zweiten Zugöse 24 des Innendurchmessers d1 angekuppelt werden kann. Dadurch wird die erste Zugöse 20 automatisch zwischen die Schenkel 26 und 27 verschwenkt.

Der Arretierbolzen 60 läßt sich nun mit seinem ersten Bolzenabschnitt spielfrei in die erste Zugöse 20 stecken. Ein Kopf 67 stützt sich nun auf dem oberen Schenkel 26 ab und verhindert das Durchrutschen des Arretierbolzen 60. Der Arretierbolzen 60 wird in diesem Fall durch Durchstecken des Splintes 68 durch eine zweite Öffnung 70 des zweiten Bolzenabschnittes 64 gegen ein Herausfallen des Arretierbolzens 70 gesichert.

## Patentansprüche

1. Zuggabel für Anhänger, mit einer ersten, einen ersten Innendurchmesser (d₁) aufweisenden Zugöse (20) und mit mindestens einer zweiten, einen zweiten Innendurchmesser (d₂) aufweisenden Zugöse (24), wobei zum Ankuppeln der Zuggabel (10) an eine Anhängerkupplung (50) eines Zugfahrzeuges ein Kupplungsbolzen (52) der Anhängerkupplung (50) durch eine der beiden Zugösen (20, 24) durchsteckbar ist und die erste Zugöse (20) sowie die zweite Zugöse (24) als Köpfe eines gemeinsamen Elementes, vorzugsweise einer gemeinsamen Stange (22), ausgebildet sind, das mittels eines Drehgelenkes (40) in einer Horizontalebene um mindestens 180° verschwenkbar an der Zuggabel (10) gelagert und dort arretierbar ist, dadurch gekennzeichnet, daß die Zuggabel (10) an ihrem freien Ende übereinander zwei horizontale Schenkel (26, 27) aufweist, zwischen denen das Element verschwenkbar gelagert ist, und daß zum Arretieren des Elementes an der Zuggabel (10) mindestens ein lösbarer Arretierbolzen (60) vorgesehen ist, der durch die beiden Schenkel (26, 27) sowie eine der beiden Zugösen (20, 24) gesteckt ist, die sich zwischen den Schenkeln (26, 27) befindet.

2. Zuggabel nach Anspruch 1, dadurch gekennzeichnet, daß der Arretierbolzen (60) einen ersten Bolzenabschnitt (62) mit einem dem ersten Innendurchmesser (d₁) der ersten Zugöse (20) entsprechenden Durchmesser und einen zweiten Bolzenabschnitt (64) mit einem dem zweiten Innendurchmesser (d₂) der zweiten Zugöse (24) entsprechenden Durchmesser aufweist.

3. Zuggabel nach Anspruch 2, dadurch gekennzeichnet, daß in dem ersten Schenkel (26) eine erste Öffnung (63) mit einem dem ersten Innendurchmesser (d1) und in dem zweiten Schenkel (27) eine zweite Öffnung (65) mit einem dem zweiten Innendurchmesser (d₂) entsprechenden Durchmesser vorgesehen ist, wobei die erste Zugöse (20) oder die zweite Zugöse (24) in eine Position zwischen der ersten Öffnung (63) und der zweiten Öffnung (65) bringbar ist, und der Arretierbolzen (60) durch die erste Öffnung (63), die erste Zugöse (20) oder die zweite Zugöse (24) und die zweite Öffnung (65) steckbar ist.

4. Zuggabel nach einem oder mehreren der Ansprüche 1 bis 3, dadurch gekennzeichnet, daß das Drehgelenk (40) einen demontierbaren Gelenkbolzen (44) aufweist.
